# EUROPEAN PATENT SPECIFICATION

(11) **EP 1 375 992 B1**
(45) Date of publication and mention of the grant of the patent: **09.08.2006**
(21) Application number: 02254292.2
(22) Date of filing: 20.06.2002
(51) Int. Cl.: F16L 23/032

(54) **Pipe flange with predefined fixing position**
Rohrflanschverbindung mit definierter Montageposition
Joint de bride de tuyau avec position de montage prédéfinie

(43) Date of publication of application: 02.01.2004
(73) Proprietor: GENERAL ELECTRIC COMPANY, Schenectady, NY 12345 (US)
(72) Inventor: Storage, Michael Ralph, Beavercreek, Ohio 45434 (US); Graham, David Lee, Xenia, Ohio 45385 (US); Bryan, Leon James, Jamestown, Ohio 45335 (US)
(74) Representative: Pedder, James Cuthbert

(56) References cited:
- GB-A- 1 163 184
- US-A- 3 877 731
- US-A- 4 919 453
- US-A- 5 090 837
- US-B1- 6 439 619

## Description

The present invention relates to connecting two pipes or tubes at their flanges and more particularly to connecting the flanges with the two pipes or tubes clocked or circumferentially angled with respect to each other.

Pipes or tubes are often clamped together at their flanges with couplings that have been used for making fluid joints such as for conducting high temperature and pressure fluids. The flanges are typically male and female with the male flange received within the female flange. The male flange has an inner ring wall received within an outer ring wall of the female flange. An example of such a coupling is found in U.S. Patent Number 4,919,453 entitled "Low Profile V-Coupling" assigned to EG&G Pressure Science, Inc. (Beltsville, MD). In the gas turbine engine industry and in particular in the aircraft gas turbine engine industry many of the connections are made between bent pipes that may have compound bends in the axial, circumferential, and radial directions. Because space is limited and many tubes and pipes are located on outside casings of the engine the relative angular orientation or clocking, as it is referred to in the industry, between the two coupled pipes is very important. To that end clocking tabs or other protrusions have welded onto one of the flanges and mating slots or holes have been cut through the other flange. The designed clocking of the two pipes is achieved when the tab or protrusion is set in the slot or hole. These clocking features require manufacturing of the tabs and slots and subsequent welding of the tab to its respective flange. This adds expense and time to the manufacturing process and increases cost of the fluid joint and thus it is desirable to be able to clock the male and female flanges relative to each other with clocking features that are is less expensive and less time consuming to manufacture as compared to present designs.

According to the invention, a pipe connection includes a longitudinally extending first pipe portion having an annular first flange at a first distal end of the first pipe and a longitudinally extending second pipe portion having an annular second flange at a second distal end of the, second pipe. One of the flanges is a male flange and the other of the flanges is a female flange. The male flange has a ring shaped male wall longitudinally extending from a longitudinally facing flat surface of the male flange. The female flange has a ring shaped female wall longitudinally extending from a longitudinally facing first flat surface of the female flange. The male and female walls are shaped and sized such that the male wall can be received within the female wall. A detent is formed from and in and extending radially from a first one of the walls toward a second one of the walls. A notch extends radially into the second one of the walls and is sized and shaped to receive the detent therein.

In the exemplary embodiment of the invention, the notch is machined part way into in the second one of the walls. The detent may be a dent punched into the first one of the walls. The notch may be cylindrical in shape.

In the exemplary embodiment of the invention, the notch is formed in the male wall and the detent is formed in the female wall. One embodiment of the invention includes a clamp having retaining members with grooves circumscribing at least part of the flanges with the male wall received within the female wall. The grooves and the flanges are tapered.

The invention will now be described in greater detail, by way of example, with reference to the drawings, in which:-
FIG. 1 is a longitudinal sectional view illustration of an exemplary embodiment of a coupled pair of male and female peripheral flanges with clocking features of the present invention coupling and clocking of a pair of coupled pipes;
FIG. 2 is a perspective view illustration of a clocking feature on the male peripheral flange; and
FIG. 3 is a perspective view illustration of a clocking feature on the female peripheral flange.

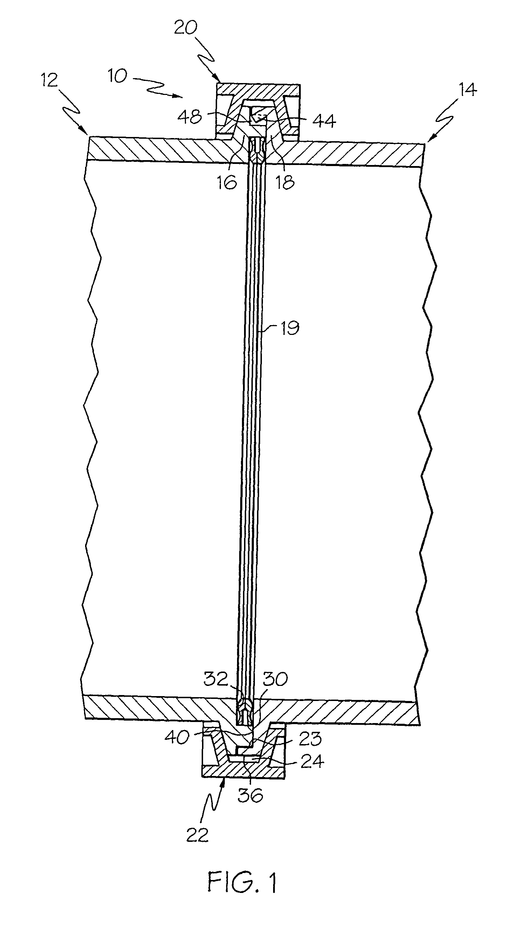

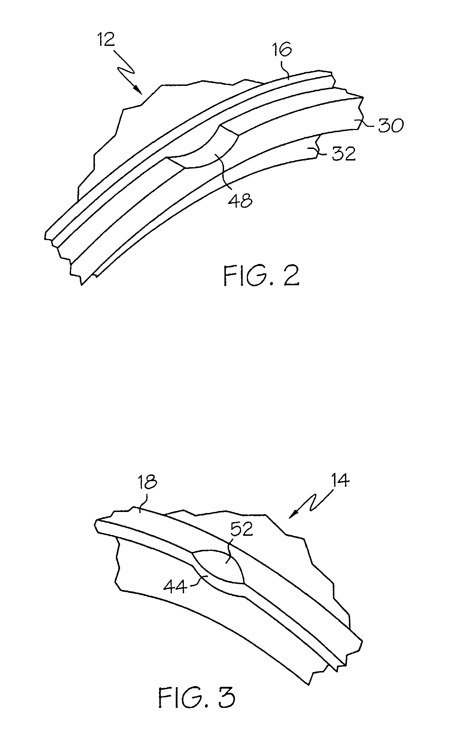

Referring now to the drawing in detail, wherein identical numerals indicate the same elements throughout the figures, FIG. 1 depicts an exemplary embodiment of a clocking pipe connection 10 of the present invention connecting and clocking (angularly aligning) first and second male and female peripheral tapered flanges 16 and 18 of first and second coaxial pipe portions 12 and 14 respectively. For the purpose of this patent the term pipes includes tubes. The male and female flanges 16 and 18 respectively (as further illustrated in FIGS. 2 and 3) are coaxial and in abutment with each other and having an E-shaped seal 19 positioned therebetween. A coupling clamp denoted by retaining members 20 and 22 has inner circumferentially extending V-shaped grooves 24 receiving the male and female flanges 16 and 18 therein. The clamp is a well known type more particularly described in U.S. Patent No. 4,919,453.

Referring further to FIGS. 2 and 3, the male flange 16 has a ring shaped male wall 30 longitudinally extending from a longitudinally facing flat surface 32 of the male flange. The female flange 18 has a ring shaped female wall 36 longitudinally extending from a longitudinally facing first flat surface 40 of the female flange. The male and female walls 30 and 36 are shaped and sized such that the male wall is received within the female wall when the pipes are connected with the invention. A detent 44 is formed from and in and extending radially from a first one of the walls toward a second one of the walls and a notch 48 extends radially into the second one of the walls and is sized and shaped to receive the detent therein.

In exemplary embodiment the detent 44 is formed in the female wall 18 and the notch 48 is formed in the male wall 30. In the exemplary embodiment of the invention, the notch 48 is machined part way into in the male wall. The detent 44 is illustrated as a dent 52 punched into the female wall 36. The notch 48 may be machined into the male wall 30 with a grinder or milling machine and may be cylindrical in shape.

The includes a clamp 20 having retaining members with grooves circumscribing at least part of the flanges with the male wall received within the female wall. The grooves and the flanges are tapered.

## Claims

1. A pipe connection (10) comprising:
a longitudinally extending first pipe portion (12) having an annular first flange (16) at a first distal end of said first pipe,
a longitudinally extending second pipe portion (14) having an annular second flange (18) at a second distal end of said second pipe,
one of said flanges being a male flange (16) and other of said flanges being a female flange (18),
said male flange (16) having a ring shaped male wall (30) longitudinally extending from a longitudinally facing flat surface (32) of said male flange and said female flange (18) having a ring shaped female wall (36) longitudinally extending from a longitudinally facing first flat surface (40) of said female flange,
said male and female walls being shaped and sized such that said male wall (30) can be received within said female wall (36), **characterised by**
a detent (44) formed from and in and extending radially from a first one of said walls toward a second one of said walls, and
a notch (48) extending radially into said second one of said walls sized and shaped to receive said detent (44) where said detent (44) and said notch (48) clock said male and female flanges (16, 18) with respect to each other..

2. A pipe connection (10) as claimed in claim 1 wherein said notch (48) is machined part way into in said second one of said walls.

3. A pipe connection (10) as claimed in claim 2 wherein said notch (48) is cylindrical in shape.

4. A pipe connection (10) as claimed in claim 1, 2 or 3, wherein said detent (44) is a dent (52) punched into said first one of said walls.

5. A pipe connection (10) as claimed in claim 4 wherein said notch (48) is machined part way into in said second one of said walls.

6. A pipe connection (10) as recited in claim 1 wherein the annular first flange (16) is an annular male flange and wherein the annular second flange (18) is an annular female flange.

7. A pipe connection (10) as claimed in claim 6 wherein said notch (48) is machined part way into in said male wall (30).

8. A pipe connection (10) as claimed in claim 6 or 7 wherein said detent (44) is a dent (52) punched into said female wall (36).

9. A pipe connection (10) as claimed in claim 8 wherein said notch (48) is machined part way into in said male wall (30).

10. A pipe connection (10) as claimed in claim 9 wherein said notch (48) is cylindrical in shape.

## Patentansprüche

1. Rohrverbindung (10), aufweisend:
einen sich in Längsrichtung erstreckenden ersten Rohrabschnitt (12) mit einem ringförmigen ersten Flansch (16) an einem ersten distalen Ende des ersten Rohres,
einen sich in Längsrichtung erstreckenden zweiten Rohrabschnitt (14) mit einem ringförmigen zweiten Flansch (18) an einem zweiten distalen Ende des zweiten Rohres,
wobei einer von den Flanschen ein Vorsprungflansch (16) und der andere von den Flanschen ein Rücksprungflansch (18) ist,
wobei der Vorsprungflansch (16) eine ringförmige vorspringende Wand (30) aufweist, die sich in Längsrichtung aus einer in Längsrichtung weisenden ebenen Fläche (32) des Vorsprungflansches erstreckt, und der Rücksprungflansch (18) eine ringförmige rückspringende Wand (30) aufweist, die sich in Längsrichtung aus einer in Längsrichtung weisenden ersten ebenen Fläche (40) des Rücksprungflansches erstreckt,
wobei die vorspringende und rückspringende Wand jeweils so geformt und dimensioniert sind, dass die Vorspringende Wand (30) innerhalb der rückspringenden Wand (36) aufgenommen werden kann,
**gekennzeichnet durch**:
eine Rastnase (44), die aus der und in der und sich radial erstreckend aus einer ersten von den Seitenwänden zu einer zweiten von den Seitenwänden hin erstreckend ausgebildet ist, und
eine Auskerbung (48), die sich radial in die zweite von den Wänden so dimensioniert und geformt erstreckt, dass sie die Rastnase (44) dort aufnimmt, wo die Rastnase (44) und die Auskerbung (48) den Vorsprung- und den Rücksprungflansch (16, 18) in Bezug zueinander in Eingriff bringen.

2. Rohrverbindung (10) nach Anspruch 1, wobei die Auskerbung (48) teilweise in die zweite von den Seitenwänden eingearbeitet ist.

3. Rohrverbindung (10) nach Anspruch 2, wobei die Auskerbung (48) eine zylindrische Form aufweist.

4. Rohrverbindung (10) nach Anspruch 1, 2 oder 3, wobei die Rastnase (44) eine in die erste von den Seitenwänden eingestanzte Ausbuchtung (52) ist.

5. Rohrverbindung (10) nach Anspruch 4, wobei die Auskerbung (48) teilweise in die zweite von den Seitenwänden eingearbeitet ist.

6. Rohrverbindung (10) nach Anspruch 1, wobei der ringförmige erste Flansch (16) ein ringförmiger Vorsprungflansch ist und wobei der ringförmige zweite Flansch (18) ein ringförmiger Rücksprungflansch ist.

7. Rohrverbindung (10) nach Anspruch 6, wobei die Auskerbung (48) teilweise in die vorspringende Wand (30) eingearbeitet ist.

8. Rohrverbindung (10) nach Anspruch 6 oder 7, wobei die Rastnase (44) eine in die rückspringende Wand (36) eingestanzte Ausbuchtung (52) ist.

9. Rohrverbindung (10) nach Anspruch 8, wobei die Auskerbung (48) teilweise in die vorspringende Wand (30) eingearbeitet ist.

10. Rohrverbindung (10) nach Anspruch 9, wobei die Auskerbung (48) eine zylindrische Form aufweist.

## Revendications

1. Raccord (10) pour tuyaux, comprenant :
une portion (12) d'un premier tuyau s'étendant longitudinalement, ayant une première bride annulaire (16) à une première extrémité distale dudit premier tuyau,
une portion (14) de second tuyau s'étendant longitudinalement, ayant une seconde bride annulaire (18) à une seconde extrémité distale dudit second tuyau,
une desdites brides étant une bride mâle (16) et l'autre desdites brides étant une bride femelle (18),
ladite bride mâle (16) ayant une paroi mâle de forme annulaire (30) s'étendant longitudinalement depuis une surface plane (32), orientée longitudinalement, de ladite bride mâle et ladite bride femelle (18) ayant une paroi femelle de forme annulaire (36) s'étendant longitudinalement depuis une première surface plane (40), orientée longitudinalement, de ladite bride femelle,
lesdites parois mâle et femelle ayant une forme et des dimensions telles que ladite paroi mâle (30) peut être reçue dans ladite paroi femelle (36),
**caractérisé par**
un moyen de verrouillage (44) formé à partir de et dans et s'étendant radialement depuis une première desdites parois vers une seconde desdites parois, et
une encoche (48) s'étendant radialement à l'intérieur de ladite seconde desdites parois, ayant des dimensions et une forme permettant de recevoir ledit moyen de verrouillage (44) lorsque ledit moyen de verrouillage (44) et ladite encoche (48) verrouillent l'une par rapport à l'autre lesdites brides mâle et femelle (16, 18).

2. Raccord (10) pour tuyaux selon la revendication 1, dans lequel ladite encoche (48) est formée par usinage partiel de ladite seconde desdites parois.

3. Raccord (10) pour tuyaux selon la revendication 2, dans lequel ladite encoche (48) a une forme cylindrique.

4. Raccord (10) pour tuyaux selon la revendication 1, 2 ou 3, dans lequel ledit moyen de verrouillage (44) est un creux (52) formé par estampage dans ladite première desdites parois.

5. Raccord (10) pour tuyaux selon la revendication 4, dans lequel ladite encoche (48) est formée en usinant partiellement ladite seconde desdites parois.

6. Raccord (10) pour tuyaux selon la revendication 1, dans lequel la première bride annulaire (16) est une bride annulaire mâle et dans lequel la seconde bride annulaire (18) est une bride annulaire femelle.

7. Raccord (10) pour tuyaux selon la revendication 6, dans lequel ladite encoche (48) est formée par usinage partiel dans ladite paroi mâle (30).

8. Raccord (10) pour tuyaux selon la revendication 6 ou 7, dans lequel ledit moyen de verrouillage (44) est un creux (52) formé par estampage dans ladite paroi femelle (36).

9. Raccord (10) pour tuyaux selon la revendication 8, dans lequel ladite encoche (48) est formée par usinage partiel dans ladite paroi mâle (30).

10. Raccord (10) pour tuyaux selon la revendication 9, dans lequel ladite encoche (48) a une forme cylindrique.
